## Europäisches Patentamt
## European Patent Office
## Office européen des brevets

(19)

(11) Numéro de publication: **0 062 960**
**B1**

(12) # FASCICULE DE BREVET EUROPEEN

(45) Date de publication du fascicule du brevet:
**14.11.84**

(51) Int. Cl.³: **H 04 L 11/16**

(21) Numéro de dépôt: **82200444.6**

(22) Date de dépôt: **13.04.82**

(54) **Procédé de gestion de l'émission-réception de données dans un réseau local de communication et système de transmission de données pour l'application du procédé.**

(30) Priorité: **15.04.81 FR 8107558**

(43) Date de publication de la demande:
**20.10.82 Bulletin 82/42**

(45) Mention de la délivrance du brevet:
**14.11.84 Bulletin 84/46**

(84) Etats contractants désignés:
**DE FR GB IT SE**

(56) Documents cités:
**FR - A - 2 275 834**
**US - A - 4 017 841**
**US - A - 4 227 045**
**CONTROL ENGINEERING, vol. 27, no. 9, septembre 1980, NEW YORK (US) M.J. MCGOWAN: "Process bus protocol orchestrates distributed or centralized control", pages 129-132**
**PATENTS ABSTRACTS OF JAPAN, vol. 1, no. 42, 25 avril 1977, page 2614E76**

(73) Titulaire: **S.A. PHILIPS INDUSTRIELLE ET COMMERCIALE, 50 Avenue Montaigne, F-75380 Paris Cedex 08 (FR)**
(84) Etats contractants désignés: **FR**

(73) Titulaire: **N.V. Philips' Gloeilampenfabrieken, Groenewoudseweg 1, NL-5621 BA Eindhoven (NL)**
(84) Etats contractants désignés: **DE GB IT SE**

(72) Inventeur: **Segarra, Gérard, Sociéte Civile S.P.I.D. 209, rue de l'Université, F-75007 Paris (FR)**
Inventeur: **Allain, Jean-Louis, Société Civile S.P.I.D. 209, rue de l'Université, F-75007 Paris (FR)**

(74) Mandataire: **Souquet, Georges et al, Société Civile S.P.I.D. 209, rue de l'Université, F-75007 Paris (FR)**

## Description

La présente invention concerne un procédé de gestion de l'émission-réception de données dans un réseau local de communication comportant une pluralité de stations à la fois émettrice et réceptrice, ces stations étant connectées chacune à un canal pour le transit de données, lesdites stations constituant un anneau logique de communication, chaque station ayant sa propre adresse et comportant un indicateur d'adresses, ledit procédé comportant les étapes suivantes:

a) l'allocation d'un droit à émettre à la station dont la propre adresse correspond à l'adresse indiquée par l'indicateur d'adresses;

b) l'émission d'un, et d'un seul, message par la station qui a le droit d'émettre et, au cas où cette dernière n'a pas d'information à émettre lors de la réception du droit d'émettre, l'émission par ladite station d'un message de présence;

c) l'avancement d'une position desdits indicateurs d'adresses par une indication de fin de message du message émis par la station qui a le droit d'émettre;

d) le recyclage desdits indicateurs d'adresses lorsque chacune desdites stations a eu le droit d'émettre.

Un tel procédé est appliqué dans le système de transmission de données décrit dans le brevet américain N° 4017841. Le système décrit dans ledit brevet américain comporte une pluralité de stations connectées à un canal pour le transit de données, chaque station ayant comme indicateur d'adresses un compteur d'allocation et comme propre adresse un numéro. Les compteurs d'allocations étant tous synchronisés, chaque station reçoit le droit d'émettre lorsque son compteur d'allocation indique son numéro. Au cas où une station n'a aucun message d'information à émettre, elle émet quand même un message de présence qui, dans ce cas, est tout simplement l'indication de fin de message avec laquelle tout message d'information émis est normalement clôturé. L'indication de fin de message sert à son tour pour l'incrémentation des compteurs d'allocations des différentes stations. Lorsque chaque station a reçu à son tour le droit d'émettre, tous les compteurs d'allocation sont remis à zéro et l'on entame ainsi un nouveau tour où chaque station recevra à nouveau son droit d'émettre.

Les réseaux locaux de communication sont appelés à un grand avenir puisqu'ils comprennent, par exemple, des applications industrielles ou privées, de télédistribution de messages, de textes, de sons ou d'images; dans ces applications, les stations locales peuvent être aussi bien des postes récepteurs de télévision, des postes téléphoniques, des machines industrielles, des ordinateurs ou des périphériques; le canal est constitué physiquement d'un réseau de câbles coaxiaux, ou de fibres optiques ou tout autre moyen de transport de données à haute fréquence.

L'inconvénient du procédé de gestion tel qu'il est appliqué dans le système de transmission de données selon le brevet américain N° 4017841 réside dans le fait que si une station, qui a le droit d'émettre, reste silencieuse, tout le système s'arrête, car il reste bloqué sur cette station silencieuse. Puisque cette station est silencieuse, elle n'émet donc pas d'indication de fin de message, ce qui a pour conséquence que les compteurs d'allocations ne sont pas incrémentés, ne donnant ainsi pas le droit d'émettre à la prochaine station de l'anneau logique de communication; or, ce silence est une situation tout à fait normale, par exemple dans des applications de bureautique où une station peut être débranchée en l'absence de l'utilisateur.

La présente invention a pour but de réaliser un procédé où une intervention est prévue lorsqu'une station qui a le droit d'émettre reste silencieuse.

En effet, un procédé de gestion de l'émission-réception de données dans un réseau local de communication selon l'invention est caractérisé en ce qu'il comporte:

— la détection par une station déterminée, appelée station pilote, de l'absence d'émission d'un message d'un type quelconque par la station qui a le droit d'émettre;

— l'émission par ladite station pilote d'un message de substitution après détection de ladite absence d'émission.

Comme l'avancement d'une position des indicateurs d'adresses, par exemple des compteurs d'allocations, est réalisé par l'indication de fin de message, par exemple la retombée de porteuse d'un message émis, ce sera l'indication de fin de message du message de substitution émis par la station pilote qui fera avancer les indicateurs d'adresses des différentes stations, donnant ainsi le droit d'émettre à une prochaine station. Avec un tel procédé, il est donc impossible qu'une station silencieuse bloque tout le système.

Dans un système de transmission de données où chaque message reçu par une station est emmagasiné dans une mémoire à capacité limitée, le procédé selon l'invention est particulièrement remarquable en ce qu'un signal de rejet est émis sur le canal par la station réceptrice lors d'un débordement de la mémoire à capacité limitée. En procédant de cette façon, la station émettrice du message, ayant fait déborder la mémoire, peut être mise au courant du problème. Il faut toutefois noter que l'émission d'un signal de rejet est un procédé qui est appliqué dans des systèmes où la station réceptrice vérifie, conformément à une norme donnée, le message qu'elle vient de recevoir. Le signal de rejet est émis par la station réceptrice lorsque la vérification s'est révélée non conforme. De tels systèmes sont, par exemple, décrits dans l'article de M. Michel Martin, paru dans «Zéro Un Informatique», N° 146, décembre 1980 — janvier 1981, pp. 78-82. Losqu'un message émis par le canal a fait l'objet d'un signal de rejet, la station émettrice, qui a pris note de ce rejet, peut réémettre ledit message sur le canal. Dans le cas où la station émettrice doit attendre un acquittement de la (ou des) station(s) réceptrice(s) avant de donner le droit d'émettre à une prochaine station, le canal n'est pas utilisé, d'où une perte de temps et un rendement inférieur du système. Le procédé selon l'invention remédie à cet inconvénient. Le procédé selon l'invention est particulièrement remarquable en ce que ladite réémission dudit message est effectuée lors d'une prochaine allocation dudit droit d'émettre pour ladite station émettrice.

En émettant lors d'une prochaine allocation du droit d'émettre, il n'y a perte ni de temps ni de rendement du système.

De préférence, le procédé selon l'invention est caractérisé en ce que, après avoir émis un message et entre deux allocations successives d'un droit d'émettre, chaque signal de rejet ayant rapport audit message émis est mémorisé par la station émettrice, ainsi que la propre adresse de la station qui a émis le signal de rejet, et que ledit message est réémis par la station émettrice lors de l'allocation suivante d'un droit d'émettre pour ladite station émettrice. Ayant mémorisé la propre adresse de la (ou des) station(s) qui a (ont) émis un signal de rejet, c'est-à-dire qui n'a (ont) pas reçu convenablement le message émis, la station émettrice du message est informée du problème et peut ainsi en tenir compte et même essayer de le résoudre lors de son prochain tour d'émission.

Dans le cas où un message comporte plusieurs bits disposés dans un ordre défini, un procédé selon l'invention est particulièrement caractérisé en ce que l'émission du signal de rejet est effectuée par le positionnement à une valeur définie d'au moins un bit à un premier endroit déterminé. La station émettrice reconnaît ainsi, à la valeur du bit à l'endroit déterminé dans le message émis par la station réceptrice, si le message qu'elle a émis a été rejeté. Dans le même ordre d'idées, le message réémis comporte au moins un bit positionné à une valeur définie et à un second endroit déterminé du message, pour l'indication que le message est réémis. La station réceptrice reconnaît ainsi les messages répétés.

Lorsque chaque message émis est destiné à plusieurs stations, une forme préférentielle du procédé de gestion selon l'invention est caractérisé en ce qu'un message réémis par la station émettrice est traité par les stations destinatrices ayant émis un signal de rejet lors de la précédente émission dudit message, et est désactivé par les autres stations destinatrices. On évite ainsi que les stations destinatrices ayant reçu correctement le message traitent à nouveau le même message.

Lorsque le recyclage desdits indicateurs d'adresses est effectué au moyen d'un message de recyclage émis par la station pilote, un procédé selon l'invention est particulièrement caractérisé en ce que, lors d'un branchement d'une station autre que la station pilote (dite station locale) au canal, un cycle d'observation est effectué par ladite station locale, lequel cycle comprend:

a) l'attente par ladite station locale d'un message de recyclage émis par la station pilote;

b) la réception du message de recyclage;

c) l'attente de l'indication de sa propre adresse par son indicateur d'adresses;

d) lors de l'indication de sa propre adresse par son indicateur d'adresses, vérification de l'émission par la station pilote d'un message de substitution et, lors de la réception dudit message de substitution, clôture du cycle d'observation;

e) lors de la non-réception dudit message de substitution lors de ladite indication de sa propre adresse par son indicateur d'adresse, le positionnement d'un signal d'erreur.

On obtient ainsi que le branchement d'une station s'effectue sans problèmes.

L'invention concerne aussi un système de transmission de données pour l'application du procédé selon l'invention. Un tel système de transmission de données est caractérisé en ce que la station pilote comporte un compteur de temps d'inactivité pour le comptage de temps d'inactivité d'une station ayant le droit d'émettre, et pour engendrer ledit message de substitution lors d'un franchissement par le compteur de temps d'inactivité d'une valeur prédéterminée.

Le compteur de temps d'inactivité étant démarré lors de l'allocation du droit d'émettre à la station, le franchissement d'une durée prédéterminée provoque l'émission d'un message de substitution.

Dans une forme préférentielle, un système de transmission de données selon l'invention comporte n + 1 (n ∈ $\mathbb{N}$) stations à la fois émettrices et réceptrices, dont n stations dites locales ayant comme propre adresse un numéro de 1 à n, et ladite station pilote portant le numéro 0, chaque station ayant comme indicateur d'adresses un compteur d'allocations. Il est caractérisé en ce que chaque station locale comporte des moyens de détection d'un message de substitution, moyens qui ont une entrée connectée à une sortie dudit compteur d'allocations pour la réception de la valeur indiquée par le compteur d'allocations, et qui comportent une mémoire pour la mémorisation du numéro d'une station ayant fait l'objet d'un message de substitution.

En étant informées de l'absence ou de la non-activité d'une station, les autres stations peuvent en tenir compte, par exemple en n'envoyant pas de messages au numéro absent.

Dans un système de transmission de données où chaque station comporte des moyens d'identification de type de message, une autre forme préférentielle selon l'invention est caractérisée en ce que lesdits moyens d'identification de type de message ont une entrée connectée à une sortie dudit compteur d'allocations pour la réception de la valeur indiquée par le compteur d'allocations, moyens d'identification de type de message qui comportent une mémoire pour la mémorisation d'une station ayant fait l'objet soit d'un message de substitution, soit d'un signal de rejet.

Chaque station est ainsi informée de l'état des autres stations et peut tenir compte de cet état.

La réalisation d'un réseau local de communications conforme à l'invention comporte bien d'autres avantages: élimination des collisions, réémission des messages incorrects, élaboration de données de gestion du réseau.

L'invention sera maintenant décrite au moyen des figures suivantes:

la fig. 1a montre, au moyen d'un diagramme, le procédé de gestion selon l'invention, sous une forme générale,

la fig. 1b montre le schéma physique d'un réseau local,

la fig. 2 montre le schéma logique d'un réseau local,

la fig. 3 montre la structure de la station pilote,

la fig. 4 montre le contenu des registres internes de la station pilote,

la fig. 5 décrit l'automate de contrôle de la station pilote,

la fig. 6 montre le fonctionnement de la station pilote,

la fig. 7 montre la structure d'une station locale,

la fig. 8 montre le contenu des registres internes d'une station locale,

la fig. 9 montre les états successifs de l'automate d'une station locale.

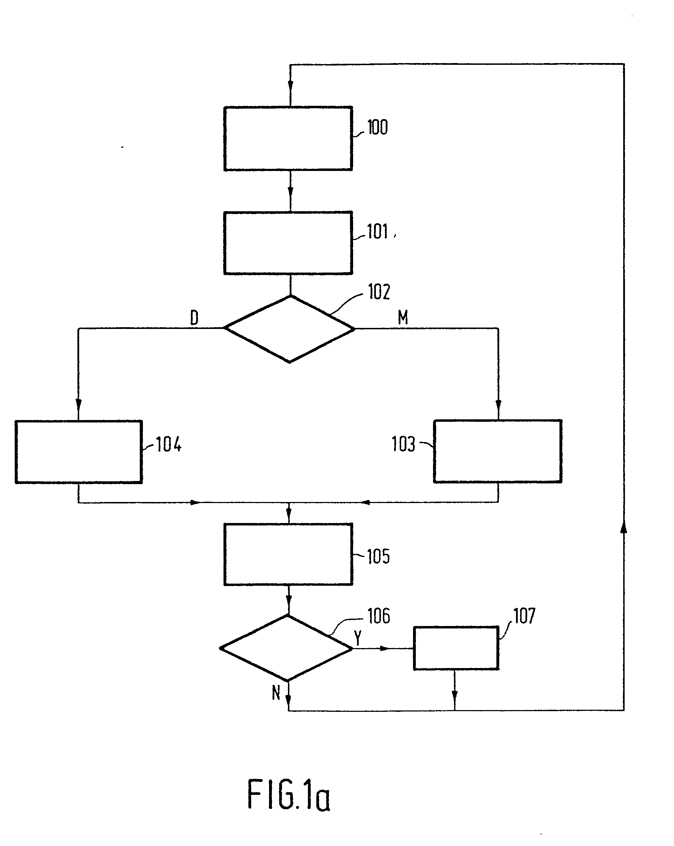

La fig. 1a montre, au moyen d'un diagramme, le procédé de gestion selon l'invention sous une forme générale. Le procédé est appliqué pour l'émission-réception de données dans un réseau local de communication comportant une pluralité de stations, à la fois émettrice et réceptrice. Les stations sont connectées chacune à un canal pour le transit de données, en particulier de données sous forme de messages. Chaque station a sa propre adresse et comporte un indicateur d'adresses, par exemple un pointeur indiquant successivement les différentes adresses dans une liste où sont indiquées les adresses des différentes stations ou, dans le cas où la propre adresse est formée par un numéro, l'indicateur d'adresse peut être constitué tout simplement par un compteur d'allocations. Une station, appelée station pilote, a un rôle privilégié par rapport aux autres stations, appelées stations locales. Ce rôle privilégié apparaîtra plus clairement dans la suite de la description du diagramme montré dans la fig. 1a.

Lorsque l'indicateur d'adresse d'une station indique la propre adresse de la station, cette dernière obtient un droit d'émettre, ce qui signifie que c'est au tour de cette station d'émettre un message sur le canal 100. Au moment où la station obtient le droit d'émettre, un compteur de temps d'inactivité est démarré (101). Le compteur de temps d'inactivité fait partie des éléments composant ladite station pilote. On peut considérer deux possibilités 102: soit la station qui a reçu le droit d'émettre est présente et fonctionne normalement, soit elle est absente et ne répond pas à la réception du droit d'émettre.

Au cas où la station est présente (M), elle émet le message qu'elle voulait émettre, par exemple le message qu'elle avait en mémoire et, si elle n'a pas de message à émettre, elle émet un message de présence conformément au procédé. L'émission d'un message d'un type quelconque fait arrêter (103) le compteur de temps d'inactivité et le remet à zéro. Cette opération de remise à zéro du compteur de temps peut aussi être effectuée juste avant le démarrage du compteur du temps d'inactivité.

Au cas où la station est absente, le compteur de temps d'inactivité n'est pas arrêté par l'émission d'un message d'un type quelconque, ce qui signifie qu'il va dépasser (D) une valeur prédéterminée significative d'une station silencieuse. Le dépassement par le compteur de temps d'inactivité de cette valeur prédéterminée va provoquer l'émission par la station pilote d'un message de substitution (SUB) (104), ainsi que l'arrêt du compteur de temps d'inactivité.

L'indication de fin de message (message d'information, de présence, de substitution, etc.) émis sur le canal va maintenant (105) provoquer l'avancement d'une position desdits indicateurs d'adresses. Cette indication de fin de message peut être soit quelques bits ajoutés à la fin du message, comme décrit dans la demande de brevet française N° 77.32158 publiée sous le N° 2406916, soit la retombée de porteuse du message émis sur le canal. En faisant avancer l'indicateur d'adresses, le droit d'émettre est ainsi donné à une autre station du réseau. Après que chacune des stations connectées au canal a reçu le droit d'émettre, on entamera un nouveau tour où, à nouveau, chaque station recevra le droit d'émettre. Pour cela, il est nécessaire de recycler les indicateurs d'adresses de toutes les stations. Afin de procéder en temps utile au recyclage des indicateurs d'adresses, on vérifie (106), par exemple au moyen d'un comparateur, si l'anneau logique a été bouclé, c'est-à-dire si toutes les stations ont eu le droit d'émettre. Si l'anneau a effectivement été bouclé, on procède au recyclage (107) des indicateurs d'adresses. Ce recyclage est effectué par une remise en position initiale du pointeur au cas où un pointeur est utilisé, ou par une remise à zéro au cas où on utilise un compteur d'allocations. Cette remise à zéro du compteur d'allocations est, par exemple, effectuée par un message de remise à zéro (RAZ) émis par la station pilote au cas où on utilise de simples compteurs d'allocations.

Après l'avancement des indicateurs d'adresses et, si nécessaire, leur recyclage, le procédé est repris (100) pour une prochaine station.

L'invention sera maintenant décrite plus amplement dans sa forme préférentielle. Dans cette forme préférentielle, on considère que n + 1 stations sont connectées au canal, lequel est bidirectionnel. La station pilote porte le numéro 0 et toutes les autres stations locales portent comme propre adresse un numéro de 1 à n, chaque station locale ayant bien entendu un numéro différent. Comme indicateur d'adresses, des compteurs d'allocations sont utilisés, qui sont incrémentés lors de la retombée de porteuse d'un message émis sur le canal.

Nous décrirons d'abord les formats possibles des messages, puis le fonctionnement du réseau. Les types de messages sont les suivants: les messages courts et les messages longs.

Parmi les messages courts, on trouve essentiellement:

— Message du type RAZ: longueur 8 bits (remise à zéro);

— Message du type RAE: longueur 2 bits (rien à émettre), message de présence;
— message du type SUB: longueur 4 bits (substitution).

Ces trois premiers types de messages sont très courts; ce sont des messages de service qui ne doivent pas encombrer le canal; ils pourraient avoir tous la même longueur avec des valeurs de bits différentes mais, pour des raisons d'efficience, on a préféré, dans le mode de réalisation décrit, leur donner des longueurs différentes pour éviter toute ambiguïté. Seul le premier bit du message est toujours à zéro dans un but d'autosynchronisation du code Manchester, les autres bits pouvant prendre différentes valeurs utiles, mais ne concernant pas directement l'invention présente.

La forme générale des messages longs est la suivante:

| Préambule | Service | Adresse | Données | Contrôle |
|---|---|---|---|---|
| 1        8 | 9   10   11        14 | 15        24 | 25 | |
| (8 bits) | (6 bits) | (10 bits) | | (16 bits) |

Le bit Nº 1 est toujours à 0; c'est le bit d'autosynchronisation.

Les bits Nos 2 à 8 n'ont pas d'intérêt pour l'invention; ils peuvent être utilisés pour des vérifications physiques de la qualité du message, par exemple pour le contrôle automatique de gain nécessaire en fonction de la puissance électrique du message reçu.

Le bit Nº 9 est à 1 en mode adressé: une seule station destinatrice;
est à 0 en mode diffusé: plusieurs stations destinatrices.

Le bit Nº 10 est à 1 pour le format NORMAL;
est à 0 pour le format RÉPÉTÉ.

Le bit Nº 11 est à 1 normalement;
est à 0 dans le cas REJETÉ.

La signification précise du format normal, du format répété et du cas rejeté sera expliquée ultérieurement.

Les bits Nos 12 à 14 n'ont pas de rapport direct avec l'invention; ils peuvent être utilisés pour la télécommande, ou téléchargement de programme, de machines n'ayant pas de ressources propres, par exemple comme décrit dans le brevet français Nº 79.02524 publié sous le Nº 2448190. Les bits Nos 15 à 24 (10 bits) contiennent l'adresse de destination du message, c'est-à-dire soit, en mode adressé, le numéro de la station destinatrice, soit, en mode diffusé, le numéro d'une fonction connue de chaque station connectée à cette même fonction.

A partir du bit Nº 25, par multiples de 8, on trouve les données, sous forme d'octets dans l'exemple décrit; il peut arriver qu'il n'y ait aucun octet de données, par exemple quand seule l'émission d'un message de type REJETÉ est nécessaire. Le maximum prévu dans l'exemple décrit est de 1024 octets de données par message, mais ce n'est pas une limitation propre à l'invention.

Les 16 bits finals sont des bits de contrôle — FCS — qui permettent une vérification de la transmission physique par un procédé du type, par exemple, division de la trame de données par un polynôme générateur (voir à ce sujet le «Livre orange», tome VIII.2, du CCITT, en particulier le paragraphe 2.2.7).

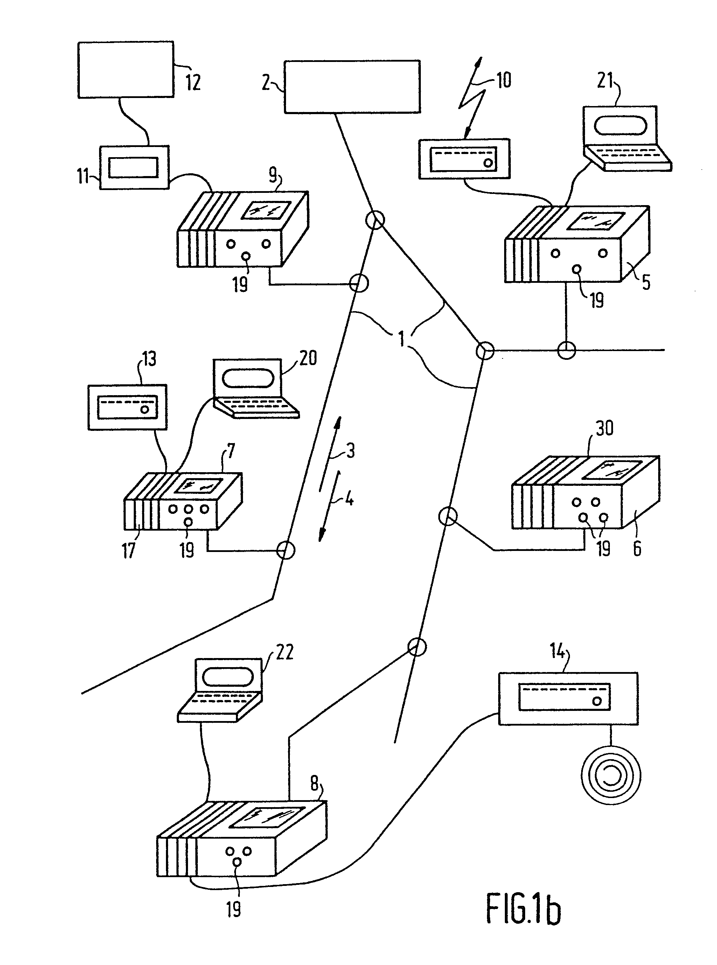

La fig. 1b montre le schéma physique d'un exemple d'un réseau local de communications composé, entres autres, des éléments suivants: un réseau de câbles coaxiaux (1) interconnectés, ces câbles pouvant aussi être des fibres optiques ou autres; un dispositif de transposition en fréquence (2); les messages transitent dans le réseau, par exemple à la vitesse de 8 Mbits/s, d'une part, à l'émission vers le dispositif de transposition en fréquence (2), c'est le canal de retour (3) (reverse channel, en anglais) avec une porteuse dont la fréquence est par exemple de 48 MHz, d'autre part, à la réception à partir du dispositif de transposition en fréquence (2), c'est le canal direct (4) (forward channel, en anglais) avec une porteuse dont la fréquence est par exemple de 148 MHz; sur le réseau sont connectés des modems (5, 6, 7, 8, 9); dans l'exemple choisi, chaque modem peut être partagé entre quatre stations, chaque station étant constituée d'au moins une carte (17), c'est-à-dire d'un circuit imprimé adéquatement équipé, et assez généralement d'un appareil connecté à cette carte; toutefois, une station peut n'être constituée que par une carte qu'un opérateur peut commander au moyen des boutons et voyants (19) disponibles sur le panneau de contrôle de chaque modem (6).

Dans la plupart des réseaux locaux, on trouve des appareils connectables à chaque carte; ces appareils correspondent aux diverses fonctions d'une organisation: fonction de puissance de calcul avec un frontal (11) et un ordinateur (12), fonction de connexion à un réseau du type Transpac par exemple (10), fonction de bureautique, traitement de texte (13), fonction de bases de données stockées sur un support-disque par exemple (14); cette énumération n'est évidemment pas limitative. L'accès à ces fonctions s'effectue par des terminaux (20, 21, 22, ...), disposés dans les divers services de l'organisation, chacun d'eux étant connecté à une des cartes (17) associées à un des modems (5, 6, 7, 8, 9). On voit ici qu'il y a différents types de stations et que ces stations ne sont pas toutes systématiquement en relation les unes avec les autres. Nous y reviendrons plus loin, en particulier en traitant de l'adressage des messages.

Dans le réseau peuvent transiter des porteuses à d'autres fréquences ayant d'autres usages que la transmission des messages du réseau local décrit, par exemple des images de télévision, des transmissions de son et même des messages d'un ou de plusieurs autres réseaux locaux travaillant avec des fréquences de canal direct et de retour différentes des fréquences utilisées par le réseau décrit.

Pour des raisons pratiques, le dispositif de transposition en fréquence (2) fait souvent partie d'un récepteur de tête (headend, en anglais) recevant, *via* une antenne commune, les émissions destinées à un réseau de télédistribution.

En ce qui concerne notre réseau local de communication, la station pilote sera par exemple la carte (30) avec ou sans appareil connecté, et chaque station locale est constituée d'au moins une carte avec un appareil connecté à cette carte. La description qui suit ne s'intéresse, pour chaque station, qu'à sa partie carte qui contient, avec le modem, les couches inférieures de l'architecture en couches. Par architecture en couches, il est sous-entendu qu'une station est pour ainsi dire divisée en plusieurs parties (= couches) et que chaque partie a une ou plusieurs fonctions bien déterminées. Les différentes couches communiquent entre elles au moyen d'une ligne de communication, par exemple un bus. Cette couche carte correspond à la couche de contrôle des liens logiques de la norme ISO/TC97/SC16 (OSI). Les couches supérieures, par exemple cession, présentation, application (terminologie OSI), coopèrent avec le fonctionnement des couches inférieures mais, étant essentiellement constituées par du logiciel et étant bien connues de l'homme de l'art, ces couches supérieures ne seront pas décrites.

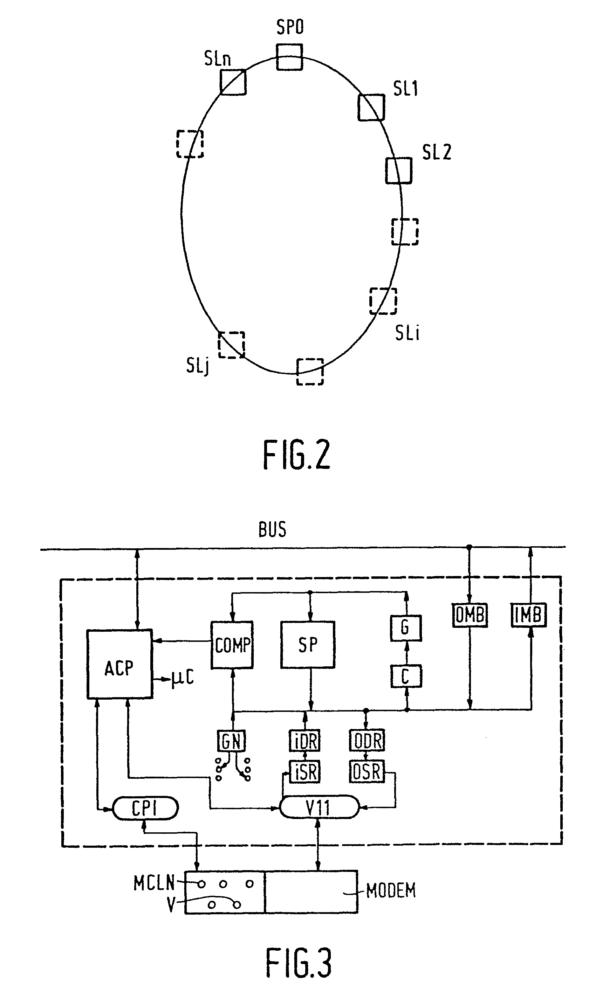

La fig. 2 montre le schéma logique de la façon dont sont adressées les différentes stations du réseau local de communication selon la fig. 1b, par exemple, où les stations locales sont représentées dans l'ordre de leur numéro, SL1, SL2, ..., SLi, ..., SLj, ..., SLn, et la station pilote représentée par SPO avec le numéro 0; il y a bien n + 1 stations au total. Dans le réseau décrit, la valeur maximale de n + 1 est 1024, mais ce n'est pas une limitation.

La fig. 3 montre la structure de la station pilote; la station pilote communique avec son modem *via* l'interface V 11 (standard CCITT, avis V11, du «Livre orange», tome VIII.2 du CCITT) et éventuellement avec la couche supérieure, si elle existe, *via* le bus qui contient des lignes de données, d'adresse et de contrôle, et permet ainsi une communication avec un processeur de cette couche supérieure par l'intermédiaire des boîtes aux lettres d'entrée IMB (input mail box) ou de sortie OMB (output mail box); l'interface V 11 est connectée au registre d'entrée série ISR, lui-même connecté au registre d'entrée parallèle IDR, et aussi au registre de sortie série OSR, lui-même connecté au registre de sortie parallèle ODR; le compteur C et la porte G permettent les modifications du contenu des registres internes SP (scratch pad); la porte GN permet d'appliquer à une entrée du comparateur COMP la valeur n + 1 (= nombre total de stations connectées au réseau) physiquement préprogrammée sur la carte avec, par exemple, des cavaliers; ces cavaliers permettent de modifier la valeur n + 1 au fur et à mesure des modifications du nombre de stations du réseau. L'automate de contrôle de la station pilote (ACP) orchestre le fonctionnement de la station pilote; il communique avec la panneau de commande du modem *via* l'interface CPI, avec le modem *via* l'interface V 11, avec la couche supérieure *via* le bus; le panneau de commande du modem comporte au moins un voyant lumineux V et un bouton de réinitialisation MCLN (master clear not) qui provoque la remise à zéro de la logique interne du modem et de toutes les cartes qui lui sont attachées; l'automate ACP sera décrit avec la fig. 5.

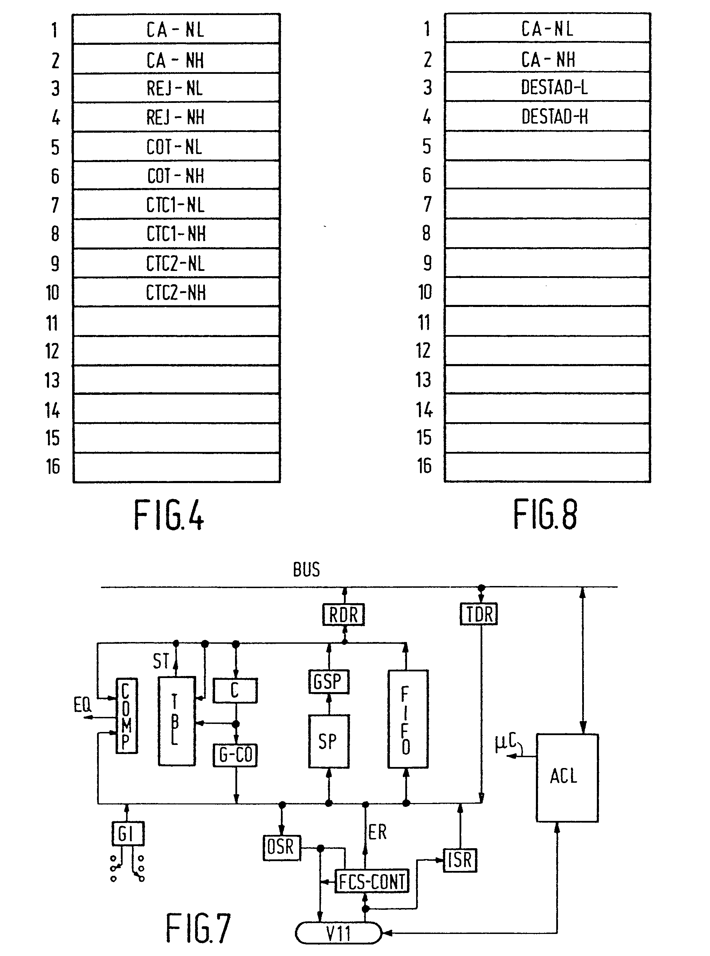

Dans la fig. 4, on décrit le contenu des registres internes SP de la station pilote. Ces registres internes sont constitués de deux circuits intégrés N° 74LS189 de chez Signetics. Ils comportent, pour l'application choisie, 16 fois 8 bits, par exemple, avec de haut en bas:

CA-NL,NH = compteur d'allocations.

REJ-NL,NH = compteur du nombre de messages REJETÉ.

COT-NL,NH = compteur du nombre d'octets transmis.

CTC1-NL,NH = compteur du temps de cycle N° 1.

CTC2-NL,NH = compteur du temps de cycle N° 2.

Parmi ces compteurs, seul le compteur d'allocations intéresse directement l'invention; les autres compteurs servent à enregistrer des données de service utiles pour la connaissance et la gestion du réseau; ces données peuvent être exploitées, par exemple, par la couche supérieure de la station pilote; le compteur de temps de cycle est double, car il est prévu de basculer de l'un sur l'autre à chaque fois qu'un message de type RAZ est émis, comme décrit par la suite.

Dans la fig. 5, on voit le détail de l'automate de contrôle (ACP) de la station pilote avec les connexions vers l'interface V 11: CT 115 — horloge bit de réception — et CT 109 — détection de l'enveloppe de la porteuse (voir à ce sujet le «Livre orange», tome VIII.1, avis V 24, du CCITT, fig. 2) et avec les connexions vers le panneau de contrôle du modem: bouton de réinitialisation MCLN et voyant V. Nous ne décrirons pas en détail l'automate de contrôle du bus (ACB), car il n'intervient pas directement dans l'invention. En effet, il est optionnel dans la mesure où il assure la connexion avec la couche supérieure de la station pilote. Par contre, nous allons décrire le séquenceur dans lequel on peut distinguer quatre parties principales: un compteur — CP — du nombre de bits des messages d'entrée, circuit 74LS193 de Signetics par exemple, est connecté, d'une part, à l'interface V 11 *via* CT 115, d'autre part, à la logique programmable FPLA de l'ensemble A; un ensemble M1 constitué d'un monostable, circuit 9602 de Fairchild par exemple, avec sa constante de temps M1-MAX déterminée par les éléments passifs R1 et C1; un ensemble M2 constitué d'un monostable, circuit 9602 de Fairchild par exemple, avec sa constante de temps M2-MAX déterminée par les éléments passifs $R_2$ et $C_2$; l'ensemble M2 comporte aussi un mémorisateur, 74LS74 de Signetics par exemple. Les ensembles M1 et M2 sont connectés *via* la ligne CT 109 au modem. L'ensemble A est un automate microprogrammé, par exemple du type Mealy, qui orchestre le fonctionnement de la station pilote; il est essentiellement constitué d'une mémoire morte M, par exemple des 82S137 de Signetics, et d'une logique programmable FPLA, par exemple un 82S100 de Signetics.

La fonction de ces différents éléments sera décrite au moyen de la fig. 6 qui montre le fonctionnement de la station pilote tel qu'il est orchestré par le séquenceur de la logique programmable FPLA. La montée de porteuse, significative d'un début de message, et la retombée de porteuse, significative d'une fin de message, sont signalées par le changement d'état de la ligne CT109 conformément à la norme déjà citée. A chaque début de message de type quelconque transitant sur le canal, le procédé suivant est démarré dans la station pilote:

— Arrêt du compteur de temps M1 (60) (ensemble M1).

Le compteur M1 est chargé de détecter une station silencieuse; nous y reviendrons.

— Mise en marche ou réarmement du compteur de temps M2 (61) (ensemble M2).

Le compteur M2 est chargé de détecter les stations dites bavardes, c'est-à-dire dont le message a une longueur supérieure au maximum admis, ce qui est caractéristique d'une panne provoquant une émission trop longue ou même ininterrompue, panne de modem par exemple.

— Vérification au moyen du compteur CP de nombre de bits si le message a moins de dix bits (62).

Tel est le cas des messages courts (RAE, SUB, RAZ).

Si une retombée de porteuse est très vite détectée, c'est un message court de 2, 4 ou 8 bits signalé par le compteur CP, et l'on va directement en (70) après avoir fait basculer (68) le compteur de temps de cycle CTC du registre interne SP, si le message était de type RAZ (67). Le fait d'avoir fait basculer le compteur CTC au cas où le message était de type RAZ va provoquer le recyclage ou la remise à zéro du compteur d'allocations de la station pilote ainsi que des compteurs d'allocations de toutes les stations locales, ce qui signifie un nouveau tour d'émission.

Si ce n'est pas un message court, le comptage des octets de données dans COT (63, 64) s'effectue par le compteur CP et, à la fin du message, le compteur de messages REJETÉ est éventuellement incrémenté de + 1 (66) si le bit No 11 était positionné à 0 (65).

A la fin du message, la retombée de porteuse fait incrémenter le compteur d'allocations de + 1 (70) et on compare ensuite, à l'aide du comparateur COMP, la valeur du compteur d'allocations avec la valeur n + 1 (= nombre total des stations) affichée dans GN (71); s'il y a égalité, ce qui signifie que chaque station a eu son tour d'émission, la station pilote émet un message de type RAZ *via* ODR et OSR (72). Dans tous les cas, la séquence se termine par l'arrêt du compteur de temps M2 et la mise en marche, ou réarmement, du compteur de temps M1 (73) provoquée par la retombée de porteuse du message.

Pendant tout ce processus, le compteur de temps M2 était en marche et, s'il n'a pas été arrêté par la retombée de porteuse significative d'une fin de message, il a pu atteindre la valeur maximale M2-MAX significative de la station bavarde; dans ce cas, le voyant lumineux V s'allume sur le panneau de contrôle du modem de la station pilote; l'opérateur devra réinitialiser le réseau avec le bouton MCLN, de réinitialisation du modem, après avoir remédié à la panne.

Comme mentionné dans la description du procédé, le compteur de temps M1 est mis en marche à la fin de la séquence par la retombée de porteuse d'un message, et arrêté au début de la séquence par la montée de porteuse d'un message émis par le canal. Toutefois, si aucun message n'est émis sur le canal par la station qui a le droit d'émettre, le compteur de temps M1 continue à s'incrémenter, puisqu'il n'est pas arrêté, et peut atteindre la valeur M1-MAX significative d'une station silencieuse. Lorsque la valeur M1-MAX est atteinte, le signal SS (station silencieuse) est alors positionné et le séquenceur A provoque alors l'émission du message standard de substitution de type SUB transmis au modem *via* ODR et OSR. L'émission du message de substitution va provoquer à son tour l'arrêt du compteur M1 (60) et l'on entamera à nouveau le procédé décrit dans la fig. 6. Ainsi, le compteur d'allocations peut s'incrémenter de + 1 (70), donnant ainsi à une autre station du réseau le droit d'émettre. On constate ainsi qu'une station silencieuse n'arrête pas le bon fonctionnement du système.

Avant de décrire une station locale, on peut dire que, parmi les éléments décrits de la station pilote dans sa forme préférentielle, certains sont essentiels pour le fonctionnement d'un réseau conforme à l'invention:

— le comparateur COMP, pace qu'il provoque l'émission d'un message du type RAZ initialisant un nouveau cycle;

— le compteur de temps M1, parce qu'il détecte chaque station silencieuse et provoque alors l'émission d'un message de type SUB de substitution qui assure l'incrémentation des compteurs d'allocations.

La fig. 7 montre la structure d'une station locale dont la carte se situe entre le modem, interface V 11, et l'appareil de la couche supérieure (non dessiné) avec lequel les échanges s'effectuent *via* le bus. Les messages d'entrée arrivent dans le registre d'entrée série ISR *via* l'interface V 11; pour un message long, les 16 derniers bits — FCS — permettent un contrôle effectué par le contrôleur FCS-CONT, par exemple un circuit 8X01 de Signetics, qui, le cas échéant, positionnera le signal d'erreur ER ayant pour objet, d'une part, de provoquer le positionnement du bit REJETÉ dans le prochain message qui sera émis, d'autre part, de mémoriser dans la table TABLE que la station est en état de récupération vis-à-vis de la station émettrice dudit message rejeté; les octets de données des messages d'entrée sont stockés dans la file d'attente d'entrée IFIFO avant d'être transmis à la couche supérieure, à sa demande, *via*

le registre RDR. Lorsque la file d'attente est pleine, et que des données d'entrée peuvent alors être perdues, la station locale peut émettre cette information de débordement par exemple par le positionnement du bit REJETÉ, et les autres stations peuvent éventuellement en tenir compte.

Les portes G-SP et G-CO associées au compteur C permettent de modifier le contenu du registre interne SP; la porte Gi permet d'appliquer à une entrée du comparateur COMP la valeur i, numéro de la station locale, physiquement préprogrammée avec, par exemple, des cavaliers; à l'autre entrée du comparateur COMP, on applique la valeur courante du compteur d'allocations, qui se trouve dans le registre interne SP et, lorsqu'il y a égalité, le signal EQ indique que c'est au tour de la station locale considérée d'émettre un message. Le compteur d'allocations de chaque station locale est incrémenté de + 1 lors de la retombée de porteuse de chaque message transitant sur le canal.

La mémoire TABLE de la station locale considérée contient 1024 positions où il est mémorisé, pour chacune des autres stations locales, d'une part, si cette station a fait l'objet d'un message REJETÉ, état de récupération, d'autre part, si cette station est active ou non, selon que la station pilote s'est substituée à elle ou non lorsque c'était à son tour d'émettre; à chaque changement d'état d'un bit de la table, la couche supérieure peut être avisée (ST).

Les messages à émettre, transmis par la couche supérieure, transitent par le registre parallèle TDR et sont émis *via* le registre de sortie série OSR en y ajoutant les bits FCS, et en positionnant, le cas échéant, le bit REJETÉ.

La fig. 8 montre le contenu du registre interne SP d'une station locale; le compteur d'allocations CA-NL,NH est incrémenté à chaque retombée de porteuse; l'adresse de destination du prochain message à émettre, DESTAD-L,H, est chargée à partir du bus en provenance de la couche supérieure.

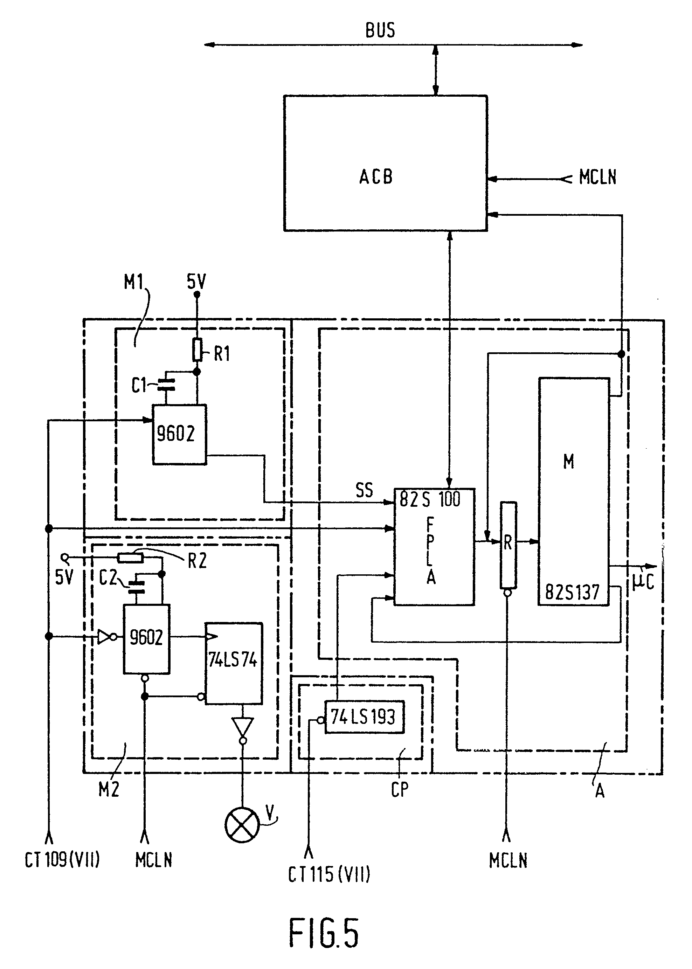

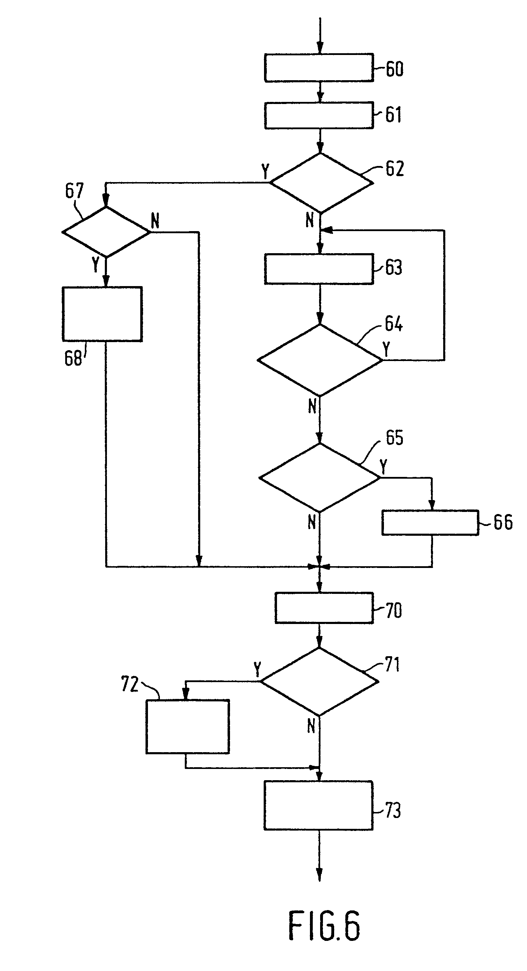

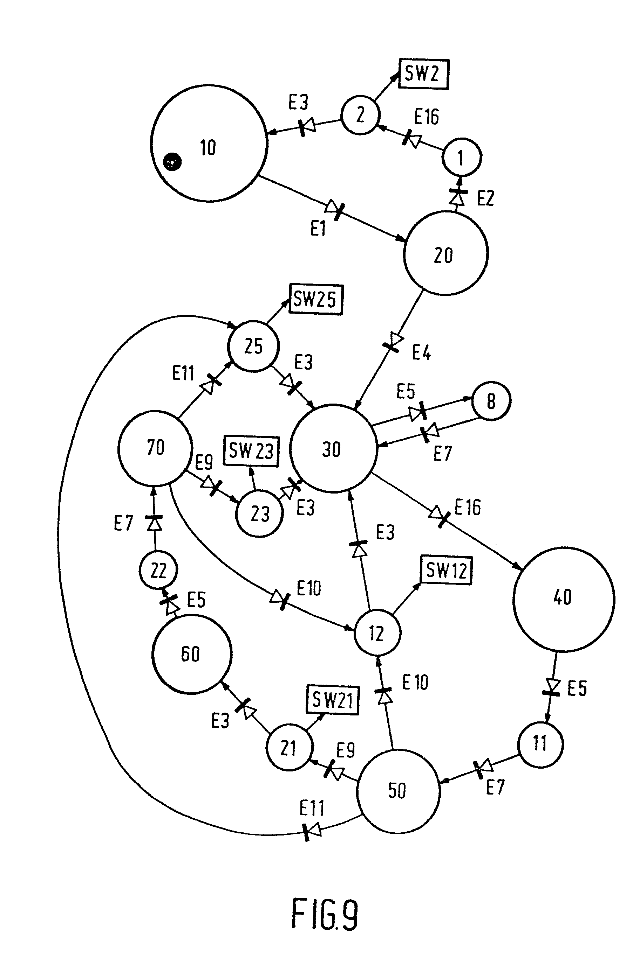

Dans la fig. 9 on a représenté une forme préférentielle du fonctionnement de l'automate (ACL) d'une station locale sous la forme d'un réseau de Petri; les états stables de l'automate, c'est-à-dire les états dans l'attente d'un événement, sont les grands cercles; les petits cercles représentent l'exécution d'une séquence microprogrammée; les événements en provenance de la couche supérieure ou de la couche inférieure, qui provoquent l'évolution d'un état à un autre, sont signalés par En; quand l'automate signale un événement à la couche supérieure, le symbole SWe est utilisé; quand un événement a été ainsi signalé, l'automate attend l'accusé de réception de la couche supérieure, E3, pour passer dans l'état suivant.

Les événements rencontrés sur la fig. 9 sont les suivants:

E1    Réception d'un message de type RAZ
E2    Réception d'un message différent de SUB
E3    Accusé de réception de la couche supérieure
E4    Réception d'un message de type SUB
E5    Allocation du canal à la station i (c'est le signal EQ émis par le comparateur COMP de la fig. 7)
E7    Retombée de la porteuse d'un message (CT109)
E9    Réception d'un message REJETÉ, sans débordement de l'IFIFO, du dernier message émis
E10   Réception d'un message REJETÉ, pour cause de débordement de l'IFIFO, du dernier message émis
E11   Accusé de réception, implicite, de la (ou des) station(s) locale(s) destinatrice(s) du dernier message émis
E16   Demande d'émission d'un message venant de la couche supérieure.

On distingue deux modes suivant lesquels les stations dialoguent entre elles: le mode adressé et le mode diffusé.

Le mode adressé consiste, avec le bit N° 9 du message positionné à 1, à renseigner la zone adresse du message, bits N°s 15 à 24, avec le numéro j de la station destinatrice; en mode adressé, il n'y a donc qu'une seule station destinatrice et donc, si celle-ci n'émet pas de REJETÉ à la première occasion qu'elle a d'émettre, c'est-à-dire quand son compteur d'allocations est égal à j, c'est que le message a bien été reçu.

Le mode diffusé consiste, avec le bit N° 9 du message positionné à 0, à renseigner la zone adresse du message, bits N°s 15 à 24, avec un numéro logique, correspondant par exemple à une des fonctions de l'organisation, à quoi sont rattachés plusieurs appareils, et donc plusieurs stations, qui dialoguent; en mode diffusé, une station locale ne sait pas quelles sont les autres stations locales connectées à ce même numéro logique, donc destinatrices du message émis, d'autant que la situation peut évoluer à chaque cycle du compteur d'allocations au gré des opérateurs de chaque station; donc, après l'émission d'un message en mode diffusé, la station émettrice i doit écouter toutes les stations pendant un cycle complet du compteur d'allocations de i à i + (n + 1), en faisant abstraction de la remise à zéro intermédiaire et, si une seule station émet un message de type REJETÉ au cours de ce cycle, la station i doit réémettre le même message en mode RÉPÉTÉ.

Les différentes stations dialoguent entre elles, certaines en mode adressé, d'autres en mode diffusé, le tout simultanément; le mode d'écoute d'une station ne diffère qu'en fonction du dernier message qu'elle a elle-même émis:

— si c'était en mode adressé, elle n'écoute, pour l'acquittement de son message, que la station destinatrice;
— si c'était en mode diffusé, elle écoute toutes les stations et, en fonction du résultat, signal de rejet ou non, elle réémet ou non le même message en mode RÉPÉTÉ.

L'émission d'un message de type REJETÉ est globale, c'est-à-dire qu'une station qui émet ce message ne précise pas quelle est, ou quelles sont, la (les) origine(s) du (des) message(s) qu'elle a mal réceptionné(s).

Mais cela a peu d'importance, car la station émettrice peut, à la lecture de son compteur d'allocations, connaître l'origine du message de type REJETÉ.

Les stations émettrices qui sont en attente d'acquittement, c'est-à-dire à l'écoute vis-à-vis de cette station, réémettront le message en mode RÉPÉTÉ.

Dans le mode de réalisation décrit, le mode RÉPÉTÉ est prévu une seule fois au niveau de la couche physique décrite, mais ce n'est pas une limitation.

Le réseau de Petri détaillé ci-dessous ne décrit le fonctionnement de l'automate d'une station que dans le mode diffusé; le mode adressé, qui n'est qu'un cas particulier plus simple du mode diffusé, n'est pas détaillé en lui-même. L'état stable initial de la station locale provoqué par la mise sous tension ou la réinitialisation (MCLN) est l'état 10; au démarrage de la station, l'automate attend l'événement E1, Réception d'un message de type RAZ, pour passer dans l'état 20; à partir de maintenant, son compteur d'allocations est synchronisé avec tous les autres; débute alors un cycle d'observation pour vérifier qu'il n'y a pas déjà une autre station de même No i connectée au réseau; si l'événement E4, Réception d'un message de type SUB, se produit lorsque le compteur d'allocations est égal à i, c'est qu'il n'y a pas une autre station No i sur le réseau, et la station peut devenir opérationnelle et passer à l'état 30; si l'événement E2, Réception d'un message différent de SUB, se produit, c'est qu'il y a déjà une station i sur le réseau; on passe à l'état 1 et, dès que la couche supérieure demandera l'émission d'un message, E16, on passera à l'état 2, où l'on avertit la couche supérieure — SW2, puis on attend son accusé de réception E3 avant de revenir à l'état 10; à ce moment, l'action de l'opérateur peut être, par exemple, de changer la valeur déterminée par les cavaliers Gi de la fig. 7.

Etant parvenu à l'état 30, si l'automate n'a rien à émettre, il va boucler entre les états 30 et 8 avec l'émission, dans l'état 8, d'un message de type RAE lorsque le compteur d'allocations atteint la valeur i (événement E5), le retour se faisant à la retombée de porteuse, événement E7.

S'il y a une demande d'émission E16, on passe à l'état 40 dans lequel le message, construit par la couche supérieure et assemblé par le séquenceur, est prêt à être envoyé. Dans le cas d'un message REJETÉ, le bit No 11 est positionné à 0. Le message est envoyé dans l'état 11 dès que le canal a été alloué à la station i (événement E5); à la retombée de porteuse, E7, on passe dans l'état 50 dans lequel l'automate écoute les réponses des autres stations au cours d'un cycle complet du compteur d'allocations, afin de s'informer d'un éventuel problème de réception. Trois cas peuvent se présenter:

— premièrement s'il y a un message REJETÉ pour cause de débordement de l'IFIFO d'une station, E10, on passe dans l'état 12 où l'on avertit la couche supérieure SW12 avant de revenir à l'état 30 dès que celle-ci aura accusé réception, E3;

— deuxièmement, s'il n'y a eu aucun message REJETÉ, c'est que, implicitement, le message a été bien reçu par la (ou les) station(s) locale(s) destinatrice(s), E11; on passe alors à l'état 25 où l'on rend compte à la couche supérieure que tout s'est bien passé, SW25, avant de revenir à l'état 30 (E3);

— troisièmement, s'il y a eu un message REJETÉ, E9, pour erreur de transmission — FCS erroné —, on passe à l'état 21 où l'on avertit la couche supérieure SW21 puis, après E3, Accusé de réception de la couche supérieure, on passe à l'état 60 où l'on est prêt pour réémettre, état 22, le même message en mode RÉPÉTÉ, c'est-à-dire avec le bit No 10 du message positionné à 0 dès que le canal est à nouveau alloué, E5; à la retombée de porteuse E7, on passe à l'état 70 où, à nouveau, les mêmes trois cas peuvent se présenter:

— premièrement, E10, Réception d'un message REJETÉ, pour cause de débordement de l'IFIFO, du dernier message émis; on revient à l'état 12 déjà décrit;

— deuxièmement, E11, Accusé de réception, implicite, de la (ou des) station(s) locale(s) destinatrice(s) du dernier message émis; on revient à l'état 25 déjà décrit;

— troisièmement, E9, Réception d'un message REJETÉ, sans débordement de l'IFIFO, du dernier message émis; on passe à l'état 23, où on confirme l'erreur de transmission, SW23, à la couche supérieure avant de revenir à l'état 30.

Dans l'état 50 comme dans l'état 70, les événements E9 et E10, exclusifs de l'événement E11, ne sont pas exclusifs l'un de l'autre; la priorité est en général donnée à l'événement E9 sur l'événement E10. Le fait de ne pas réémettre un message rejeté pour cause de débordement de l'IFIFO d'une station (premier cas) est une forme préférentielle à laquelle l'invention n'est pas limitée. On peut tout aussi bien, dans ce dernier cas, réémettre le message en suivant la procédure décrite dans le troisième cas.

Nous venons de décrire le fonctionnement de l'automate microprogrammé d'une station locale i lors de l'émission d'un message; lors de la réception d'un message émis par une station j (j ≠ i), ce même automate réagit en fonction du messge reçu; c'est ce que nous allons décrire, sans répéter ce qui a déjà été décrit à propos des messages qui sont des réponses aux messages précédement émis.

A la réception d'un message de type RAZ, (E1), le compteur d'allocations est remis à zéro.

A la réception d'un message de type RAE, l'information station présente est mémorisée dans la table (fig. 7) à la ligne j correspondant à la valeur du compteur d'allocations, c'est-à-dire au numéro de la station locale émettrice et, si c'est un changement d'état de la station j — par exemple une station qui était absente est devenue station présente — cette information est transmise à la couche supérieure.

A la réception d'un message de type SUB, par symétrie avec le message RAE précédent, l'information station silencieuse est mémorisée dans la table et, si c'est un changement d'état de la station j, l'information est transmise à la couche supérieure. De cette façon, chaque station est informée de l'état des autres stations.

A la réception d'un message long, on exécute en premier les mêmes opérations qu'à la réception d'un message RAE; ensuite, les bits de contrôle FCS sont traités. S'il y a une erreur, le bit REJETÉ No 11 sera positionné à 0 dans le message émis lors de la prochaine allocation du canal, et on mémorisera dans la table que la station i est en état de récupération vis-à-vis de la station j, sauf si c'était déjà le cas, ce qui veut dire que l'erreur de transmission est confirmée, information qui est alors transmise à la couche supérieure. Si les bits de contrôle FCS sont bons, le mode d'adressage est alors analysé (analyse de la valeur du bit No 9). Si le bit No 9 du message reçu est positionné à 1, il s'agit d'un message en mode adressé, et la station i vérifie alors si le champ d'adresse est égal à i, ce qui signifie que la station i est destinatrice du message. Si la station i est destinatrice du message reçu, elle l'accepte. Si la station i n'est pas destinatrice, le message est ignoré.

Si le bit No 9 du message reçu est positionné à 0, il s'agit d'un message en mode diffusé et la station i vérifie si le numéro logique mentionné dans le champ d'adresse correspond à une de ses fonctions. Si tel est le cas, la station i accepte le message reçu; sinon, elle l'ignore. Ensuite, le bit No 10 du message est testé et, s'il est à 0, c'est un message RÉPÉTÉ qui sera ignoré si la station i n'est pas en état de récupération vis-à-vis de la station émettrice j; cette information est disponible dans la table. Si la station i est en état de récupération vis-à-vis de la station émettrice, elle accepte le message. Si le bit No 10 est positionné à 1, le message est accepté.

Un message qui a été accepté par la station i est alors mémorisé et mis à la disposition de la couche supérieure.

## Revendications

1. Procédé de gestion de l'émission-réception de données dans un réseau local de communication comportant une pluralité de stations à la fois émettrice et réceptrice, stations connectées chacune à un canal pour le transit de données, lesdites stations constituant un anneau logique de communication, chaque station ayant sa propre adresse et comportant un indicateur d'adresses, ledit procédé comportant les étapes suivantes:

a) l'allocation d'un droit d'émettre à la station dont la propre adresse correspond à l'adresse indiquée par l'indicateur d'adresses;

b) l'émission d'un, et d'un seul, message par la station qui a le droit d'émettre et, au cas où cette dernière n'a pas d'information à émettre lors de la réception du droit d'émettre, l'émission par ladite station d'un message de présence;

c) l'avancement d'une position desdits indicateurs d'adresses par une indication de fin de message du message émis par la station qui a le droit d'émettre;

d) le recyclage desdits indicateurs d'adresses lorsque chacune desdites stations a eu le droit d'émettre,
ledit procédé étant caractérisé en ce qu'il comporte:

e) la détection par une station déterminée, appelée station pilote, de l'absence d'émission d'un message d'un type quelconque par la station qui a le droit d'émettre;

f) l'émission par ladite station pilote d'un message de substitution après détection de ladite absence d'émission.

2. Procédé de gestion selon la première revendication, où un message reçu par une station est emmagasiné dans une mémoire à capacité limitée, caractérisé en ce qu'un signal de rejet est émis sur le canal par ladite station réceptrice lors d'un débordement de la mémoire à capacité limitée.

3. Procédé de gestion selon l'une des revendications 1 ou 2, procédé qui comporte les étapes suivantes:

a) vérification, conformément à une norme donnée, par la station réceptrice, de chaque message reçu;

b) émission d'un signal de rejet par la station réceptrice lors d'une vérification révélée non conforme à la norme donnée;

c) après réception du signal de rejet, réémission par la station émettrice dudit message ayant fait l'objet d'un signal de rejet,
procédé caractérisé en ce que ladite réémission dudit message est effectuée lors d'une prochaine allocation dudit droit d'émettre pour ladite station émettrice.

4. Procédé de gestion selon l'une des revendications précédentes, caractérisé en ce que, après avoir émis un message et entre deux allocations successives d'un droit d'émettre, chaque signal de rejet ayant rapport audit message émis est mémorisé par la station émettrice, ainsi que la propre adresse de la station qui a émis le signal de rejet, et que ledit message est réémis par la station émettrice lors de l'allocaiton suivante d'un droit d'émettre pour ladite station émettrice.

5. Procédé de gestion selon l'une des revendications 2, 3 ou 4, où chaque message comporte plusieurs bits disposés dans un ordre défini, caractérisé en ce que l'émission du signal de rejet est effectuée par le positionnement à une valeur définie d'au moins un bit à un premier endroit déterminé.

6. Procédé de gestion selon l'une des revendications 3 ou 4, où chaque message comporte plusieurs bits disposés dans un ordre défini, caractérisé en ce que le message réémis comporte au moins un bit positionné à une valeur définie et à un second endroit déterminé du message pour l'indication que le message est réémis.

7. Procédé de gestion selon la revendication 6, où chaque message émis est destiné à plusieurs stations, caractérisé en ce qu'un message réémis par la station émettrice est traité par les stations destinatrices ayant émis un signal de rejet lors de la précédente émission dudit message, et est désactivé par les autres stations destinatrices.

8. Procédé de gestion selon l'une des revendications précédentes, où le recyclage desdits indicateurs d'adresses est effectué au moyen d'un message de recyclage émis par la station pilote, caractérisé en ce que, lors d'un branchement d'une station autre que la station pilote (dite station locale) au canal, un cycle d'observation est effectué par ladite station locale, cycle qui comprend:

a) l'attente par ladite station locale d'un message de recyclage émis par la station pilote;

b) la réception du message de recyclage;

c) l'attente de l'indication de sa propre adresse par son indicateur d'adresses;

d) lors de l'indication de sa propre adresse par son indicateur d'adresses, vérification de l'émission par la station pilote d'un message de substitution et, lors de la réception dudit message de substitution, clôture du cycle d'observation;

e) lors de la non-réception dudit message de substitution lors de ladite indication de sa propre adresse par son indicateur d'adresses, le positionnement d'un signal d'erreur.

9. Réseau local de communication pour l'application du procédé selon l'une des précédentes revendications, caractérisé en ce que la station pilote comporte un compteur de temps d'inactivité pour le comptage du temps d'inactivité d'une station ayant le droit à l'émission, et pour engendrer ledit message de substitution lors d'un franchissement par le compteur d'inactivité d'une valeur prédéterminée.

10. Réseau local de communication selon la revendication 9, réseau qui comporte n + 1 (n ∈ ℕ) stations à la fois émettrices et réceptrices, dont n stations dites locales ayant comme dite propre adresse un numéro de 1 à n, et ladite station pilote portant le numéro 0, chaque station ayant, comme dit indicateur d'adresses, un compteur d'allocations, caractérisé en ce que chaque station locale comporte des moyens de détection d'un message de substitution, moyens de détection qui ont une entrée connectée à une sortie dudit compteur d'allocations pour la réception de la valeur indiquée par le compteur d'allocations, et qui comportent une mémoire pour la mémorisation du numéro d'une station ayant fait l'objet d'un message de substitution.

11. Réseau local de communication selon la revendication 10, où chaque station comporte des moyens d'identification de type de message, caractérisé en ce que lesdits moyens d'identification de type de message ont une entrée connectée à une sortie dudit compteur d'allocations pour la réception de la valeur indiquée par le compteur d'allocations, moyens d'identification des types de message qui comportent une mémoire pour la mémorisation d'une station ayant fait l'objet d'un signal de rejet.

12. Réseau local de communication selon la revendication 11, caractérisé en ce que chaque station comporte des moyens d'indication pour ajouter une indication de réémission à un message ayant fait l'objet d'un signal de rejet et étant réémis, moyens d'indication qui ont une entrée connectée à une sortie desdits moyens d'identification des types de messages.

## Claims

1. A method of controlling data transmission and reception in a local communication network, comprising a plurality of transmitter/receiver stations, each of which is connected to a channel for the transport of data, said stations forming a logic communication loop, each station having its own address and comprising an address indicator, said method comprising the following steps—

(a) allocating the right to transmit to the station whose own address corresponds to the address indicated by the address indicator;

(b) transmitting a single message by the station having the right to transmit and, if this station has no information to be transmitted when it is granted the right to transmit, transmitting a presence message by said station;

(c) incrementing said address indicators by one position by an end-of-message indication of the message transmitted by the station having the right to transmit;

(d) resetting said address indicators when each of said stations has had the right to transmit;
said method being characterized in that it comprises—

(e) the detecting by a given station, referred to as the pilot station, of the absence of transmission of a message of any type by the station having the right to transmit;

(f) the transmission by said pilot station of a substitution message after the detection of said absence of transmission.

2. A control method as claimed in the Claim 1, in which a message received by a station is stored in a memory having a limited capacity, characterized in that a rejection signal is transmitted on the channel by said receiving station in the case of overflow of the memory of limited capacity.

3. A control method as claimed in Claim 1 or 2, comprising the following steps—

(a) verifying, in accordance with a given standard, each message received by the receiving station;

(b) transmitting a rejection signal by the receiving station when a verification reveals that the given standard is not met;

(c) after reception of the rejection signal retransmitting, by the transmitting station, of said message which has been the subject of a rejection signal;
said method being characterized in that said retransmission of said message takes place upon a next grant of said right to transmit to said transmitting station.

4. A control method as claimed in any one of the preceding claims, characterized in that, after the transmission of a message and between two successive grants of the right to transmit, each rejection signal concerning the transmitted message is stored by the transmitting station and also the own address of the station having transmitted the rejection signal, said message being retransmitted by the transmitting station upon the next grant of the right to transmit to said transmitting station.

5. A control method as claimed in Claim 2, 3 or 4, in which each message comprises several bits which are arranged in a defined order, characterized in that the transmission of the rejection signal is realized by setting at least one bit in a first given location to a given value.

6. A control method as claimed in Claim 3 or 4, in which each message comprises several bits which are arranged in a defined order, characterized in that the retransmitted message comprising at least one bit which is set to a given value in a second given location of the message for indicating that the message is retransmitted.

7. A control method as claimed in Claim 6, in which each transmitted message is destined for several stations, characterized in that a message which is retransmitted by the transmitting station is handled by the destination stations having transmitted a rejection signal upon the preceding transmission of said message and is deactivated by the other destination stations.

8. A control method as claimed in any one of the preceding claims, in which the resetting of said address indicators is realized by means of a resetting message transmitted by the pilot station, characterized in taht when a station other than the pilot station (a station which is referred to as a local station) is connected to the channel, an observation cycle is performed by said local station, said cycle comprising—

(a) waiting by said local station for a resetting message transmitted by the pilot station;

(b) reception of the resetting message;

(c) waiting for the indication of its own address by its address indicator;

(d) when its own address is indicated by its address indicator, verification of the transmission by the pilot station of a substitution message and, upon reception of said substitution message, termination of the observation cycle;

(e) when said substitution message is not received when its own address is indicated by its address indicator, activating an error signal.

9. A local communication network for performing the method claimed in any one of the preceding claims, characterized in that the pilot station comprises an inactive-time counter for measuring the duration of the inactivity of a station having the right to transmit and for generating said substitution message when the inactive-time counter exceeds a predetermined value.

10. A local communication network as claimed in Claim 9, comprising n + 1 (n ∈ ℕ) transmitter/ receiver stations, n stations thereof, referred to as local stations, having a number from 1 to n as said own address, said pilot station bearing the number 0, each station having an allocation counter as said address indicator, characterized in that each local station comprises means for the detection of a substitution message, an input of said detection means being connected to an output of said allocation counter in order to receive the value indicated by the allocation counter, said detection means comprising a memory for storing the number of a station which has been the subject of a substitution message.

11. A local communication network as claimed in Claim 10, in which each station comprises means for identifying the type of message, characterized in that said means for identifying the type of message have an input connected to an output of said allocation counter in order to receive the value indicated by the allocation counter, said means for identifying the types of message comprising a memory for memorizing a station which has been the subject of a rejection signal.

12. A local communication network as claimed in Claim 11, characterized in that each station comprises indication means for adding a retransmission indication to message which has been the subject of a rejection signal and which has been retransmitted, said indication means having an input connected to an output of said means for identifying the types of messages.

## Patentansprüche

1. Verfahren zur Sendeempfangssteuerung von Daten in einem lokalen Fernmeldenetz mit einer Anzahl Sende/Empfangs-Stationen, die für die Datenübertragung an je einen Kanal angeschlossen sind und zusammen einen logischen Kommunikationsring bilden und von denen jede Station eine eigene Adresse hat und einen Adressenanzeiger enthält, wobei das Verfahren folgende Schritte aufweist:

a) die Senderechtzuweisung zur Station, deren Eigenadresse der vom Adressenanzeiger angegebenen Adresse entspricht,

b) die Ausgabe einer einzigen Nachricht von der Station mit dem Senderecht und in Abwesenheit von zu sendender Information in dieser Station zum Zeitpunkt der Senderechtzuweisung die Ausgabe einer Anwesenheitsnachricht von dieser Station,

c) die Erhöhung der Adressenanzeiger um eine Einheitmit einer Ende-Nachricht-Anzeige für die von der Station mit dem Senderecht ausgegebene Nachricht,

d) die Rückstellung der Adressenanzeiger, wenn jede Station das Senderecht gehabt hat, dadurch gekennzeichnet, dass das Verfahren weitere Schritte umfasst:

e) die von einer vorgegebenen Station mit der Bezeichnung Steuerstation durchgeführte Detektion der Abwesenheit einer von der Station mit Senderecht durchgeführten Übertragung einer Nachricht eines beliebigen Typs,

f) die Übertragung einer Ersatznachricht von der Steuerstation nach der Detektion der Übertragungsabwesenheit.

2. Verfahren nach Anspruch 1, bei dem eine von einer Station empfangene Nachricht in einen Speicher mit beschränkter Kapazität eingeschrieben wird, dadurch gekennzeichnet, dass beim Überlaufen des Speichers mit beschränkter Kapazität von der Empfangsstation auf dem Kanal ein Ablehnungssignal ausgegeben wird.

3. Verfahrenn nach einem der beiden Ansprüche 1 oder 2, des folgenden Schritte umfasst:

a) die Prüfung jeder empfangenen Nachricht von der Empfangsstation entsprechend einer gegebenen Norm,

b) die Ausgabe eines Ablehnungssignals von der Empfangsstation bei einem nicht normgerechten Prüfungsergebnis,

c) die Neuausgabe der Nachricht, die das Objekt eines Ablehnungssignals ist, von der Sendestation nach dem Empfang des Ablehnungssignals,

dadurch gekennzeichnet, dass die Neuausgabe der Nachricht während einer folgenden Zuweisung des Senderechts an die Sendestation erfolgt.

4. Verfahren nach einem der vorangehenden Ansprüche, dadurch gekennzeichnet, dass nach der Ausgabe einer Nachricht und zwischen zwei aufeinanderfolgenden Senderechtzuweisungen jedes mit der ausgegebenen Nachricht zusammenhängende Ablehnungssignal sowie die Eigenadresse der das Ablehnungssignal ausgebenden Station von der Sendestation gespeichert werden und dass die Nachricht von der Sendestation bei der folgenden Senderechtzuweisung an die Sendestation neu ausgegeben wird.

5. Verfahren nach einem der Ansprüche 2, 3 oder 4, wobei jede Nachricht eine Anzahl in einer bestimmten Reihenfolge angeordnete Bits enthält, dadurch gekennzeichnet, dass die Ausgabe des Ablehnungssignals durch die Einstellung zumindest eines Bits auf einem bestimmten Wert an einer ersten vorgegebenen Stelle erfolgt.

6. Verfahren nach einem der beiden Ansprüche 3 oder 4, wobei jede Nachricht eine Anzahl in einer bestimmten Reihenfolge angeordneter Bits enthält, dadurch gekennzeichnet, dass die neuausgebene Nachricht zumindest ein auf einen bestimmten Wert eingestelltes und an einer vorgegebenen, zweiten Stelle angebrachtes Bit enthält, die von der Nachricht zum Anzeigen der Neuausgabe der Nachricht bestimmt wird.

7. Verfahren nach Anspruch 6, bei dem jede ausgegebene Nachricht an mehrere Stationen gelangt, dadurch gekennzeichnet, dass eine von der Sendestation neu ausgegebene Nachricht von den Bestimmungsstationen bearbeitet wird, die bei der vorangehenden Übertragung ein Ablehnungssignal abgegeben haben, und von den anderen Bestimmungsstationen entaktiviert wird.

8. Verfahren nach einem der vorangehenden Ansprüche, bei dem die Rückführung der Adressenanzeiger mit Hilfe einer von der Steuerstation ausgegebenen Rückführungsnachricht erfolgt, dadurch gekennzeichnet, dass bei der Abzweigung von einer Station anders als der Steuerstation (lokale Station genannt) nach dem Kanal diese lokale station einen Beobachtungszyklus durchführt, der folgende Schritte umfasst:

a) die Erwartung einer von Steuerstation ausgegebenen Rückführungszyklus von der lokalen Station,

b) den Empfang der Rückführungsnachricht,

c) die Erwartung der Anzeige der eigenen Adresse durch seinen Adressenanzeiger,

d) bei der Anzeige der eigenen Adresse durch seinen Adressenanzeiger die Prüfung der Ausgabe einer Ersatznachricht von der Steuerstation und die Beendigung des Beobachtungszyklus beim Empfang dieser Ersatznachricht,

e) den Einsatz eines Fehlersignals beim Ausbleiben dieser Ersatznachricht bei der Anzeige der eigenen Adresse durch seinen eigenen Adressenanzeiger.

9. Lokales Fernmeldenetz für die Verwendung des Verfahrens nach einem der vorangehenden Ansprüche, dadurch gekennzeichnet, dass die Steuerstation einen Nichtaktivitätszähler zum Zählen der nichtaktiven Zeit einer Station mit Senderecht und zum Erzeugen der Ersatznachricht enthält, wenn der Nichtaktivitätszähler einen vorgegebenen Wert überschreitet.

10. Lokales Fernmeldenetz nach Anspruch 9, das $n + 1$ ($n \in \mathbb{N}$) Sende/Empfangs-Stationen enthält, von denen n Stationen, die mit lokal bezeichnet werden, als erwähnte eigene Adresse eine Nummer von 1 bis n führen und die Steuerstation die Nummer 0 führt, wobei jede Station einen Zuweisungszähler als Adressenanzeiger besitzt, dadurch gekennzeichnet, dass jede lokale Station Detektionsmittel zum Detektieren einer Ersatznachricht enthält und diese Detektionsmittel mit einem Eingang an einen Ausgang des Zuweisungszählers für den Empfang des vom Zuweisungszähler angegebenen Werts angeschlossen sind und einen Speicher zum Aufnehmen der Nummer einer Station enthält, die das Objekt einer Ersatznachricht war.

11. Lokales Fernmeldenetz nach Anspruch 10, bei dem jede Station Identifizierungsmittel für die Nachrichtenarten enthält, dadurch gekennzeichnet, dass diese Identifizierungsmittel für die Nachrichtenarten mit einem Eingang an einen ausgang des Zuweisungszählers für den Empfang des vom Zuweisungszählers angegebenen Werts angeschlossen sind und einen Speicher zum Aufnehmen einer Station enthalten, die das Objekt eines Ablehnungssignals war.

12. Lokales Fernmeldenetz nach Anspruch 11, dadurch gekennzeichnet, dass jede Station Anzeigemittel enthält, die eine Neuausgabeanzeige der Nachricht beifügen, die das Objekt eines Ablehnungssignals war und neuausgegeben wurde, wobei diese Anzeigemittel mit einem Eingang an einen Ausgang der Identifizierungsmittel für die Nachrichtenarten angeschlossen sind.

FIG.1a

FIG.1b

FIG.2

FIG.3

19

| | |
|---|---|
| 1 | CA – NL |
| 2 | CA – NH |
| 3 | REJ – NL |
| 4 | REJ – NH |
| 5 | COT – NL |
| 6 | COT – NH |
| 7 | CTC1 – NL |
| 8 | CTC1 – NH |
| 9 | CTC2 – NL |
| 10 | CTC2 – NH |
| 11 | |
| 12 | |
| 13 | |
| 14 | |
| 15 | |
| 16 | |

# FIG.4

| | |
|---|---|
| 1 | CA – NL |
| 2 | CA – NH |
| 3 | DESTAD – L |
| 4 | DESTAD – H |
| 5 | |
| 6 | |
| 7 | |
| 8 | |
| 9 | |
| 10 | |
| 11 | |
| 12 | |
| 13 | |
| 14 | |
| 15 | |
| 16 | |

# FIG.8

FIG.7

FIG.5

FIG.6

FIG.9